# EUROPEAN PATENT SPECIFICATION

(11) **EP 2 747 179 B1**
(45) Date of publication and mention of the grant of the patent: **27.09.2017**
(21) Application number: 13835776.9
(22) Date of filing: 23.07.2013
(51) Int. Cl.: H01M 4/73, H01M 10/06, H01M 4/68, H01M 4/74, H01M 4/82

(54) **LATTICE FOR STORAGE BATTERY, METHOD FOR PRODUCING LATTICE FOR STORAGE BATTERY, AND STORAGE BATTERY USING LATTICE FOR STORAGE BATTERY**
GITTER FÜR SPEICHERBATTERIE, VERFAHREN ZUR HERSTELLUNG EINES GITTERS FÜR EINE SPEICHERBATTERIE UND SPEICHERBATTERIE MIT DEM GITTER FÜR EINE SPEICHERBATTERIE
TREILLIS POUR ACCUMULATEUR AINSI QUE PROCÉDÉ DE FABRICATION DE CELUI-CI, ET ACCUMULATEUR METTANT EN UVRE CELUI-CI

(30) Priority: 10.09.2012 JP 2012198408
(43) Date of publication of application: 25.06.2014
(73) Proprietor: GS Yuasa International Ltd., Kisshoin, Minami-ku, Kyoto-shi, Kyoto 601-8520 (JP)
(72) Inventor: FUJITA, Kohei, Kyoto-shi, Kyoto 601-8520 (JP); NOUZUKA, Kiyoshi, Kyoto-shi, Kyoto 601-8520 (JP); IWASAKI, Shota, Kyoto-shi, Kyoto 601-8520 (JP); NISHIZAWA, Junichi, Kyoto-shi, Kyoto 601-8520 (JP); SAITO, Kazuma, Kyoto-shi, Kyoto 601-8520 (JP); ISHIGURO, Hiroyuki, Kyoto-shi, Kyoto 601-8520 (JP)
(74) Representative: Isarpatent
(86) International application number: PCT/JP2013/004464
(87) International publication number: WO 2014/038123

(56) References cited:
- CN-U- 201 616 473
- GB-A- 2 127 614
- JP-A- 2004 119 023
- JP-A- 2004 213 951
- JP-B- S5 140 606
- JP-U- S5 456 132
- JP-U- S5 456 133
- JP-U- S55 104 261
- US-A1- 2012 096 695

## Description

The present invention relates to a storage battery grid and a corresponding method of manufacturing a storage battery grid.

US 2012/096695 A1 discloses a storage battery grid which has a central bone and horizontal bones extending away from the central bone. The grid also comprises sub-bones which extend vertically between the upper portion and the lower portion of the grid. The spaces of the grid are in a substantially quadrilateral shape.

GB 2127614 A discloses a storage battery grid comprising elongated oblique-angled quadrangular or polygonal regular honeycombs having their longitudinal axes and their tips oriented substantially towards the current lug.

### BACKGROUND ART

An expanded grid (i.e., a net-like grid) obtained by forming slits in, for example, a zigzag manner on a lead alloy sheet, followed by expanding, has been conventionally used as a grid for use in a storage battery, as disclosed in Patent Document 1. The expanded grid includes an upper frame having a lug portion formed thereat, a lower frame opposed to the upper frame, and a net-like frame formed between the upper frame and the lower frame. A space defined by the upper frame, the lower frame, and the net-like frame is filled with an active material, thereby constituting an electrode plate.

However, the expanded grid has no frame bone for connecting the upper frame and the lower frame to each other on right and left sides, and therefore, is liable to be elongated in a height direction, and further, is likely to be curved and deformed in a planar direction, thereby raising a problem that the active material tends to fall down. The net-like frame of the expanded grid is serrate from the lower frame to the upper frame, and therefore, a current channel up to the lug portion becomes long, thereby increasing an electric resistance. Consequently, a potential distribution becomes uneven over the entire electrode plate, thereby raising problems of local corrosion and a short lifetime of the electrode plate.

In the meantime, a cast grid including, inside of a square frame bone, many lateral frames parallel to each other and many radial frames radially extending from a lug portion disposed on an upper side of the frame bone is conceived as a grid for use in a storage battery, as disclosed in Patent Document 2. The radial frames are formed with branch frames. Each of the branch frames includes: a branch starting frame extending sideways at a large angle with respect to the base of the radial frame; and a bent starting frame continuous to the branch starting frame and bent in a radial direction.

However, the cast grid includes a portion that does not extend toward the lug portion (in particular, the branch starting frame) on a channel from the lower section toward the upper section along the branch frame, and therefore, a current channel up to the lug portion becomes long, resulting in an increase in electric resistance. Consequently, a potential distribution becomes uneven over the entire electrode plate, thereby raising problems of local corrosion and a short lifetime of the electrode plate.

### PRIOR ART DOCUMENTS

### PATENT DOCUMENTS

Patent Document 1: JP-A-7-320743
Patent Document 2: JP-Y-8-2921

### SUMMARY OF THE INVENTION

### PROBLEMS TO BE SOLVED BY THE INVENTION

In view of the above, a main object of the present invention is to enhance the mechanical strength of a grid, and further, reduce the electric resistance of the grid to regularize a potential distribution of the grid.

### MEANS FOR SOLVING THE PROBLEMS

A storage battery grid according to the present invention is defined in independent claim 1.

A method of manufacturing a storage battery grid according to the present invention is defined in independent claim 16.

With the above-described configuration, since the main bone extends from the connection portion of the first side portion, to which the lug portion is connected in the frame bone, to the second side portion, the distance between the lug portion and the second side portion of the frame bone can be reduced. The grid is provided with the sub-bone and at least the plurality of slanted bones extending slantwise from the main bone, thereby shortening a channel of a current, which is generated at a portion apart from the connection portion between the main bone and the second side portion of the frame bone, to the lug portion. In addition, the space defined by the main bone, the sub-bone, and the slanted bones includes a substantially quadrilateral shape, thereby reducing the number of bypass channels apart from the lug portion in comparison with a substantially triangular space. Consequently, in the entire grid, an electric resistance can be reduced and the potential distribution of
the grid can be made uniform. In addition, the grid includes the frame bone formed into the rectangular shape, thus enhancing a mechanical strength.

It is preferable that part of the plurality of slanted bones branches from the first side portion of the frame bone. With this configuration, the channel of a current generated on both sides of the main bone includes the slanted bones and the first side portion in a linear manner, thus shortening a current channel so as to reduce the electric resistance of the grid.

It is preferable that part of the plurality of slanted bones branches from the connection portion, to which the lug portion is connected in the first side portion of the frame bone. With this configuration, a current flowing in the slanted bone is allowed to flow in the lug portion with a short distance not via any main bone, thus reducing the electric resistance of the grid.

It is preferable that the sub-bone includes a plurality of sub-bones arranged at intervals in a direction in which the first side portion extends, and the intervals of the sub-bones increase in a direction away from the main bone. With this configuration, the intervals between the sub-bones can be optimized depending on collected electric power. Consequently, the potential distribution of the grid can be made more uniform.

In that case, it is preferable that a plurality of spaces, which are defined by the second side portion, the sub-bone and the slanted bone that are partially forming sides of the spaces, include a substantially quadrilateral shape. With this configuration, the opening area of the space can be increased without increasing the electric resistance of the grid, and therefore, the workability for filling the grid with active material paste can be enhanced.

It is preferable that the main bone is arranged perpendicularly to the first side portion and the second side portion. With this configuration, the lug portion and the second side portion of the frame bone can be connected to each other with the shortest distance, and therefore, the electric resistance of the grid can be further reduced.

It is preferable that the grid is devoid of a lateral bone that is substantially parallel to the first side portion of the frame bone. With this configuration, the channel of the current, which is generated on both sides of the main bone, includes only the channel having a directional component orienting from the second side portion to the first side portion, and therefore, the channel reaching the main bone or the lug portion can be shortened, and the electric resistance of the grid can be reduced.

It is preferable that intervals of the slanted bones, which are part of the plurality of slanted bones and branching from the main bone, increase as the slanted bones extend away from the first side portion. With this configuration, the interval between the slanted bones can be optimized depending on collected electric power. Thus, the potential distribution of the grid can be made more uniform.

It is preferable that a slant angle of the slanted bones relative to the main bone increases as the slanted bones extend away from the first side portion, the slanted bones being part of the plurality of slanted bones and branching from the main bone. With this configuration, the slant angle of the slanted bone can be optimized depending on collected electric power. Thus, the potential distribution of the grid can be made more uniform.

It is preferable that a slant angle of the plurality of slanted bones is in a range from 5 degrees to 60 degrees. With this configuration, the channel reaching the main bone can be shortened. It is particularly preferable that the slant angle of the slanted bone is 45°.

It is preferable that a width of the main bone in a plan view decreases as it extends away from the lug portion. With this configuration, the shape of the main bone can be optimized depending on collected electric power. In other words, the width of a portion, which is apart from the lug portion and electric quantity flowing thereto is small, can be reduced. Thus, the material of the grid can be reduced and cost can be reduced.

It is preferable that a width of the first side portion in a plan view increases as it approaches to the lug portion. With this configuration, the mechanical strength of the grid can be enhanced, and also the potential distribution of the grid can be made more uniform.

A storage battery according to the present invention uses any one of the above-described storage battery grids.

With this configuration, the potential distribution of the grid can be made uniform, and a high rate discharge performance can be enhanced. The mechanical strength can be enhanced, and a cycle life performance can be enhanced.

It is preferable that the storage battery grid is made from a lead alloy. With this configuration, the present invention is applicable to the lead-acid storage battery grid.

It is preferable that the storage battery grid is formed by blanking. With this configuration, the thickness of the grid can be reduced (i.e., the mass of the grid can be reduced) in comparison with a grid formed by casting. Thus, the material of the grid can be reduced and cost can be reduced.

### ADVANTAGES OF THE INVENTION

According to the present invention configured as described above, the rectangular frame bone includes the main bone and the slanted bone, thus enhancing the mechanical strength of the grid. According to the present invention, the grid is provided with the plurality of slanted bones slantwise branched from the first side portion of the frame bone and the main bone, which extends from the connection portion of the first side portion to which the lug portion is connected, thus reducing the electric resistance of the grid, making the potential distribution of the grid uniform.

### BRIEF DESCRIPTION OF THE DRAWINGS

Fig. 1 depicts a perspective view showing a lead-acid storage battery grid of an embodiment.
Fig. 2 depicts a plan view showing the lead-acid storage battery grid of the embodiment.
Fig. 3 depicts a partly enlarged view showing the lead-acid storage battery grid of the embodiment.
Fig. 4 depicts a plan view showing a first modification of the lead-acid storage battery grid.
Fig. 5 depicts a plan view showing a second modification of the lead-acid storage battery grid.
Fig. 6 depicts a plan view showing a third modification of the lead-acid storage battery grid.
Fig. 7 depicts a plan view showing a fourth modification of the lead-acid storage battery grid.
Fig. 8 depicts a plan view showing a fifth modification of the lead-acid storage battery grid.
Fig. 9 depicts a plan view showing a sixth modification of the lead-acid storage battery grid.
Fig. 10 depicts a plan view showing a seventh modification of the lead-acid storage battery grid.

### MODE FOR CARRYING OUT THE INVENTION

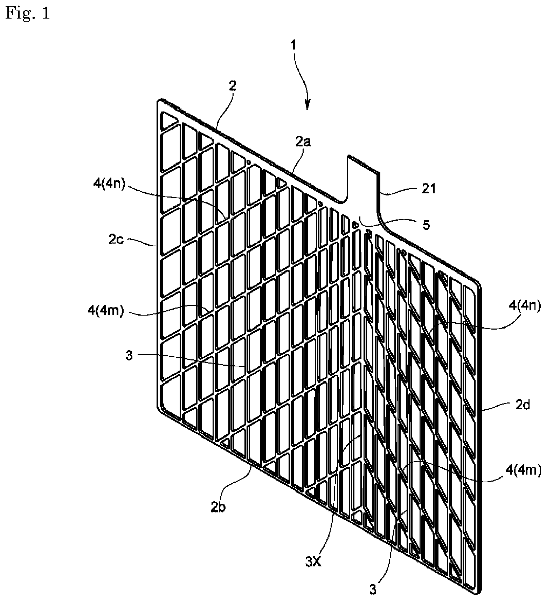

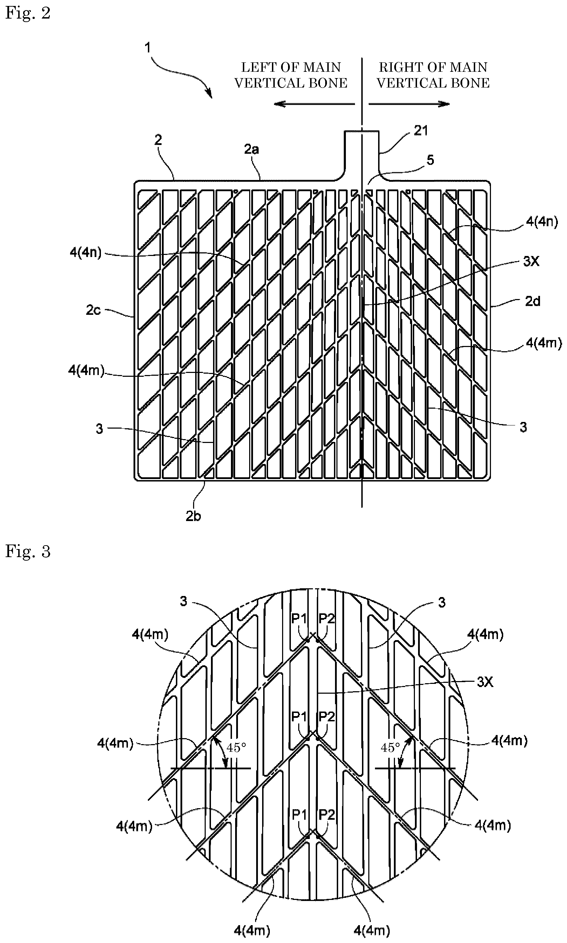

A description will be given below of an embodiment of a storage battery grid according to the present invention with reference to the attached drawings. In the present embodiment, explanation will be made by way of a grid for use in a lead-acid storage battery. Vertical and lateral directions on sheets of Fig. 1 and Fig. 2 are defined as vertical and lateral directions in the description.

A grid 1 in the present embodiment is used as one member of a positive plate or a negative plate in an electrode group serving as a power generating element for a lead-acid storage battery. In the case where the grid 1 is used for the positive plate, the grid 1 is filled with a positive active material (i.e., lead dioxide). In contrast, in the case where the grid 1 is used for the negative plate, the grid 1 is filled with a negative active material (i.e., spongy lead).

Specifically, the grid 1 is obtained by blanking a rolled sheet made of a lead alloy. As shown in Figs. 1 and 2, the grid 1 includes a frame bone 2 formed into a substantially rectangular shape, a lug portion 21 projecting from an upper side 2a (i.e., a first side portion) of the frame bone 2 upward outside of a frame, a plurality of vertical bones 3 vertically extending in a linear manner inside of the frame bone 2, and a plurality of slanted bones 4 slantwise formed inside of the frame bone 2. The grid 1 in the present embodiment is devoid of a lateral bone substantially parallel to the upper side 2a of the frame bone 2.

Specifically, the grid 1 includes, out of the plurality of vertical bones 3, a main vertical bone 3X (i.e., a main bone) formed of one or more vertical bones 3 (three in the present embodiment) extending downward from right under a connection portion 5 to the lug portion 21 at the upper side 2a. The main vertical bone 3X is substantially perpendicular to the upper side 2a of the frame bone 2 and a lower side 2b (i.e., a second side portion) opposite to the upper side 2a, and is tapered with a gradually reduced width from the upper section to the lower section, as viewed on a plane. This can make the shape of a vertical bone most suitable for collected electric power. Since a width dimension is smaller at the lower section, a material of an electrode plate can be reduced.

The plurality of vertical bones 3 (i.e., sub-bones) arranged on right and left sides of the main vertical bone 3X are arranged at intervals in the lateral direction (i.e., the extending direction) of the upper side 2a, and they are formed such that the intervals become greater as they are more apart from the main vertical bone 3X toward the right and left sides. The plurality of vertical bones 3 arranged on the right and left sides of the main vertical bone 3X are configured such that the width of each of them becomes smaller as they are more apart from the main vertical bone 3X. This can make the interval between the vertical bones 3 most suitable for collected electric power.

The plurality of slanted bones 4 include at least slanted bones 4 extending slantwise downward from the main vertical bone 3X in a linear manner. In other words, the plurality of slanted bones 4 include: a plurality of slanted bones 4 (4m) branched from the main vertical bone 3X and extending slantwise downward; and a plurality of slanted bones 4 (4n) branched from the upper side 2a of the frame bone 2 and extending slantwise downward. Some (two in the present embodiment) of the slanted bones 4 are branched from the connection portion 5 to the lug portion 21 at the upper side 2a. Thus, the upper ends of the slanted bones 4 are connected to the main vertical bone 3X or the upper side 2a of the frame bone 2; the lower ends of the slanted bones 4 are connected to the sides 2c or 2d or lower side 2b of the frame bone 2. In other words, the lower ends of the slanted bones 4 extend to reach the frame bone 2.

The plurality of slanted bones 4 are formed into a substantially inverted V shape from the main vertical bone 3X, as viewed on a plane, and therefore, they are branched from at least the main vertical bone 3X rightward and leftward of the main vertical bone 3X, and further, extend slantwise from the upper side 2a to the lower side 2b. Specifically, the plurality of slanted bones 4 are formed into a substantially linear manner in which they are inclined upward near the main vertical bone 3X, as viewed on a plane. Here, a space defined by the main vertical bone 3X and the like is formed into a substantially quadrilateral shape. In this manner, since the slanted bones 4 are substantially linear, the channel of a current generated on the right and left sides of the main vertical bone 3X becomes linear, thereby shortening the channel of a current to the main vertical bone 3X or the upper side 2a.

Specifically, the plurality of slanted bones 4 formed on the left side of the main vertical bone 3X are arranged with the intervals in the vertical direction (i.e., the extending direction) of the main vertical bone 3X at an slant angle of 45° with respect to the main vertical bone 3X, as shown in Fig. 3. The plurality of slanted bones 4 formed on the right side of the main vertical bone 3X are arranged with the intervals in the vertical direction of the main vertical bone 3X at an slant angle of 45° with respect to the main vertical bone 3X. A connection point P1 at the upper end of each of the slanted bones 4 (4m) formed on the left side and a connection point P2 at the upper end of each of the slanted bones 4 (4m) formed on the right side mate with each other in a height direction at the main vertical bone 3X. With the above-described configuration, the slanted bones 4 formed on the left side of the main vertical bone 3X and the slanted bones 4 formed on the right side of the main vertical bone 3X are laterally symmetric with each other with respect to the main vertical bone 3X.

The plurality of slanted bones 4 formed on the left side of the main vertical bone 3X are formed substantially in parallel to each other, and the plurality of slanted bones 4 formed on the right side of the main vertical bone 3X are formed substantially in parallel to each other. In this manner, the plurality of slanted bones 4 are formed substantially in parallel to each other, and therefore, a potential distribution can be made more uniform. The interval between the adjacent slanted bones 4 may be identical to each other, may be different from each other, or may be enlarged downward. In other words, the intervals between the slanted bones 4 may be varied so as to make the potential distribution uniform.

As described above, the grid 1 in the present embodiment includes: the frame bone 2 formed into a rectangular shape; the lug portion 21 that is connected to the upper side 2a of the frame bone 2 and projects outward from a frame; the main vertical bone 3X that vertically extends from the connection portion between the upper side 2a and the lug portion 21 to the lower side 2b opposite to the upper side 2a, the width of the main vertical bone 3X becoming smaller apart from the lug portion 21, as viewed on a plane; the plurality of vertical bones 3 extending from the upper side 2a to the lower side 2b, arranged in the extending direction of the upper side 2a of the frame bone 2 with the intervals that become greater apart from the main vertical bone 3X; and the plurality of slanted bones 4 that are branched from at least the main vertical bone 3X toward both sides and extend slantwise toward the lower side 2b at the slant angle from 5° to 60°. The plurality of slanted bones 4 are arranged with the intervals in the extending direction of the main vertical bone 3X. Some of the slanted bones 4 are branched from the upper side 2a of the frame bone 2, and further, some of the slanted bones 4 are branched from the connection portion to the lug portion 21 at the upper side 2a of the frame bone 2. Each of the plurality of spaces defined by the main vertical bone 3X, the vertical bone 3, and the like is at least partly formed into a substantially quadrilateral shape. Each of the plurality of spaces defined by the lower side 2b of the frame bone 2, the vertical bone 3, the slanted bone 4, and the like is partly formed into a substantially quadrilateral shape. Additionally, out of the plurality of slanted bones 4, the intervals between the plurality of slanted bones 4 branched from the main vertical bone 3X become greater apart from the upper side 2a of the frame bone 2.

Next, results from potential distribution analyses carried out with respect to the grid 1 such configured as described above and a conventional expanded grid will be shown below. The conventional expanded grid had a grid dimension [a width (mm) × a height (mm)] of 137.0 × 115.0, a grid thickness (mm) of 1.00, and a grid mass (g) of 42.0. In contrast, the lead-acid storage battery grid according to the present invention had a grid dimension [a width (mm) × a height (mm)] of 137.0 × 115.0, a grid thickness (mm) of 0.80, and a grid mass (g) of 42.0. A current of 1 A was made to flow at the upper end of the lug portion in each of the conventional expanded grid and the lead-acid storage battery grid according to the present invention, followed by a potential distribution analysis.

The rate of a potential drop (i.e., a voltage drop) with reference (0V) to a lower frame of the conventional expanded grid is assumed as 100%. In the case where the slant angle of the slanted bone of the lead-acid storage battery grid according to the present invention is varied from 0° to 80°, the rate of a potential drop with reference (0V) to the lower side of the lead-acid storage battery grid according to the present invention and the uniformity of a potential distribution are shown in Table 1.

**[Table 1]**

| GRID | SLANT ANGLE OF SLANTED BONE | RATE OF POTENTIAL DROP OF GRID (%) | UNIFORMITY OF POTENTIAL DISTRIBUTION OVER ENTIRE GRID | REMARKS |
|---|---|---|---|---|
| CONVENTIONAL EXPANDED GRID | - | 100 | × | PRIOR ART |
| LEAD-ACID STORAGE BATTERY GRID ACCORDING TO PRESENT INVENTION | 0 | 50 | ○ | COMPARATIVE EXAMPLE |
| | 5 | 48 | ⊙ | EXAMPLE |
| | 15 | 48 | ⊙ | EXAMPLE |
| | 25 | 48 | ⊙ | EXAMPLE |
| | 30 | 48 | ⊙ | EXAMPLE |
| | 35 | 48 | ⊙ | EXAMPLE |
| | 45 | 48 | ⊙ | EXAMPLE |
| | 60 | 49 | ⊙ | EXAMPLE |
| | 80 | 50 | ○ | COMPARATIVE EXAMPLE |

| | | | | |
|---|---|---|---|---|
| * UNIFORMITY OF POTENTIAL DISTRIBUTION ... ⊙: EXCELLENT, ○: GOOD, ×: BAD | | | | |

The rate of the potential drop of the lead-acid storage battery grid according to the present invention was decreased down to 48% to 50% of that of the conventional expanded grid. The uniformity of the potential distribution of the lead-acid storage battery grid according to the present invention was ⊙ or ○ (excellent or good), that is, it was more excellent than that of the conventional expanded grid since the uniformity of the potential distribution of the conventional expanded grid was × (bad). In view of this, it was found that the potential distribution of the entire lead-acid storage battery grid according to the present invention was made to be uniform in comparison with that of the conventional expanded grid. The uniformity of the potential distribution of the entire grid when the slant angle of the slanted bone of the lead-acid storage battery grid according to the present invention ranged from 0° to 80° was ○ (good), and further, the uniformity of the potential distribution when the slant angle of the slanted bone of the lead-acid storage battery grid according to the present invention ranged from 5° to 60° was ⊙ (excellent). It was found from the results that the potential distribution was made to be more uniform within the range from 5° to 60° of the slant angle of the slanted bone of the lead-acid storage battery grid according to the present invention.

In this manner, the use of the lead-acid storage battery grid according to the present invention for a lead-acid storage battery can enhance a high rate discharge performance (a cold cranking current and a low temperature high rate discharge performance) more than the use of the conventional expanded grid when it has almost the same lead mass as that of the conventional expanded grid. In the meantime, when an electrode plate for a lead-acid storage battery according to the present invention is used for a lead-acid storage battery, substantially the same high rate discharge performance (a cold cranking current and a low temperature high rate discharge performance) as that of the conventional expanded grid can be achieved by an electrode plate having a smaller lead mass.

The results of elongation analyses carried out with respect to the above-described conventional expanded grid and the above-described lead-acid storage battery grid according to the present invention are shown in Table 2.

**[Table 2]**

| GRID | SLANT ANGLE OF SLANTED BONE | RATE OF GRID ELONGATION (%) | | REMARKS |
|---|---|---|---|---|
| | | WIDTH DIRECTION (LATERAL DIRECTION) | HEIGHT DIRECTION (VERTICAL DIRECTION) | |
| CONVENTIONAL EXPANDED GRID | - | 100 | 100 | PRIOR ART |
| LEAD-ACID STORAGE BATTERY GRID ACCORDING TO PRESENT INVENTION | 0 | 50 | 57 | COMPARATIVE EXAMPLE |
| | 5 | 50 | 57 | EXAMPLE |
| | 15 | 50 | 57 | EXAMPLE |
| | 25 | 60 | 57 | EXAMPLE |
| | 30 | 70 | 43 | EXAMPLE |
| | 35 | 80 | 43 | EXAMPLE |
| | 45 | 80 | 43 | EXAMPLE |
| | 60 | 50 | 43 | EXAMPLE |
| | 80 | 50 | 43 | COMPARATIVE EXAMPLE |

Assuming that each of the rate of a grid elongation in the width direction (i.e., the lateral direction) of the conventional expanded grid and the rate of a grid elongation in the height direction (i.e., the vertical direction) of the conventional expanded grid was set to 100%, the rate of a grid elongation in the width direction in the lead-acid storage battery grid according to the present invention ranged from 50% to 80% of that of the conventional expanded grid whereas the rate of a grid elongation in the height direction ranged from 43% to 57%: namely, they were decreased. In view of these, it was found that the grid elongation in each of the width direction and the height direction was decreased in the lead-acid storage battery grid according to the present invention. Consequently, the cycle life performance of the lead-acid storage battery using the grid according to the present invention can be enhanced, for example, the number of cycles in a cycle life test at an ambient temperature of 75° pursuant to the light load lifetime test determined by JIS 5301 is increased.

With the grid 1 according to the present embodiment such configured as described above, the main vertical bone 3X is disposed under the lug portion 21, and therefore, the distance between the lug portion 21 and the lower side 2b of the frame bone 2 can be shortened. The plurality of slanted bones 4 extend slantwise downward from at least the main vertical bone 3X, and therefore, the channel for a current generated at the sides of the main vertical bone 3X toward the main vertical bone 3X or the lug portion 21 can be shortened. Additionally, the plurality of slanted bones 4 are formed into the substantially inverted V shape on the main vertical bone 3X, as viewed on a plane, and therefore, the channels for currents generated on the right and left sides of the main vertical bone 3X toward the main vertical bone 3X or the lug portion 21 can be shortened. Furthermore, the space defined by the main vertical bone 3X and the slanted bones 4 is formed into the substantially quadrilateral shape, thereby reducing bypass channels remote from the lug portion 2 in comparison with a triangular shape. Consequently, in the entire grid 1, an electric resistance can be decreased and the potential distribution of the electrode plate can be made uniform. In addition, the frame bone 2 is formed into the substantially rectangular shape, thus enhancing a mechanical strength.

The grid 1 of the present embodiment includes the plurality of vertical bones 3 and the plurality of slanted bones 4 but is devoid of the lateral bone substantially parallel to the upper side 2a of the frame bone 2. Therefore, the channel of the current generated on the right and left sides of the main vertical bone 3X includes only the upward channel formed of the vertical bones 3 and the slantwise upward channel formed of the slanted bones 4. The channel reaching the lug portion 21 via the main vertical bone 3X and the upper side 2a can be shortened, thus reducing the electric resistance.

Since the grid 1 is formed by blanking, the thickness of the grid can be further reduced (that is, the mass of the grid can be further reduced) in comparison with the case where the grid is formed by casting. As a consequence, the material of the grid is reduced, thus reducing a cost. A difference in thickness of the grid is caused by a difference in corrosion mode due to a difference in metallic tissue. In general, a cast grid has a large crystalline grain. Corrosion proceeds in such a manner as to enter a crystalline grain field, and therefore, the cast grid has characteristics of a small corrosion ratio at which the grid is broken. In contrast, the punched grid manufactured by blanking a rolled sheet is rolled after the fabrication of a slab, so that a large crystalline grain contained in the slab is elongated in a roll direction. In this manner, there is no crystalline grain field that may break the grid, and thus, corrosion sequentially proceeds from the grid surface. With these characteristics, the punched grid manufactured with the rolling sheet can be reduced in grid thickness in comparison with the cast grid.

The grid 1 is manufactured by blanking or casting in the following manner. A rectangular frame bone is formed. A lug portion is formed in such a manner as to be connected to a first side portion of the frame bone and project outward of a frame. A main bone is formed in such a manner as to extend from a connection portion to the lug portion at the first side portion to a second side portion opposite to the first side portion. A sub-bone is formed in such a manner as to extend from the first side portion to the second side portion. A plurality of slanted bones are formed in such a manner as to be branched from at least the main bone toward both sides and slantwise extend toward the second side portion. The plurality of slanted bones are arranged at intervals in the extending direction of the main bone. Each of a plurality of spaces defined by the main bone, the sub-bones, and the like is at least partly formed into a substantially quadrilateral shape.

Incidentally, the present invention is not limited to the above-described embodiment.

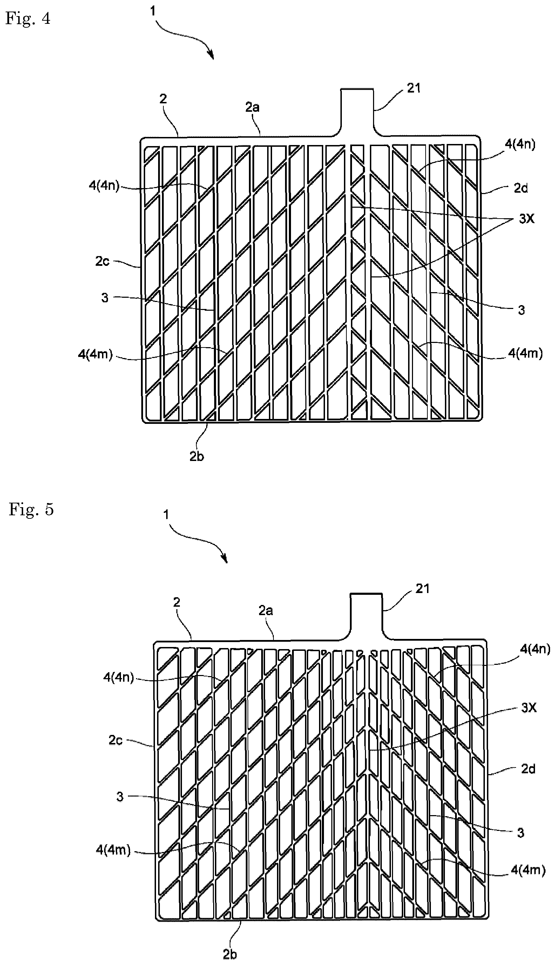

For example, in the above-described embodiment, the main vertical bone 3X is formed of one vertical bone 3, and the plurality of slanted bones 4 extend from the main vertical bone 3X. However, a main vertical bone 3X may be formed of a plurality of vertical bones 3 (two in Fig. 4), and a plurality of slanted bones 4 may extend from the plurality of main vertical bones 3X, as shown in Fig. 4.

Furthermore, as shown in Fig. 5, an upper side 2a of a frame bone 2 may be increased in height toward a lug portion 21, as viewed on a plane. Specifically, the lower surface of the upper side 2a of the frame bone 2 is formed into a substantially V shape inclined downward toward the lug portion 21 from both ends thereof. Consequently, the mechanical strength of a grid 1 can be enhanced, and further, a potential distribution of an electrode plate can be made more uniform.

Not only a main vertical bone 3X but also other vertical bones 3 may be decreased in width from the upper section to the lower section. Fig. 5 shows a case where three vertical bones 3 on right and left sides of the main vertical bone 3X are decreased in width from the upper section to the lower section.

The slant angle (e.g., 45°) of each of the plurality of slanted bones 4 on the left side of the main vertical bone 3X and the slant angle (e.g., 45°) of each of the plurality of slanted bones 4 on the right side of the main vertical bone 3X are the same in the above-described embodiment. However, the slant angles of slanted bones 4 on right and left sides may be different from each other. Specifically, the slant angle of each of a plurality of slanted bones 4 on the left side of the main vertical bone 3X may be 45° whereas the slant angle of each of a plurality of slanted bones 4 on the right side of the main vertical bone 3X may be 60°.

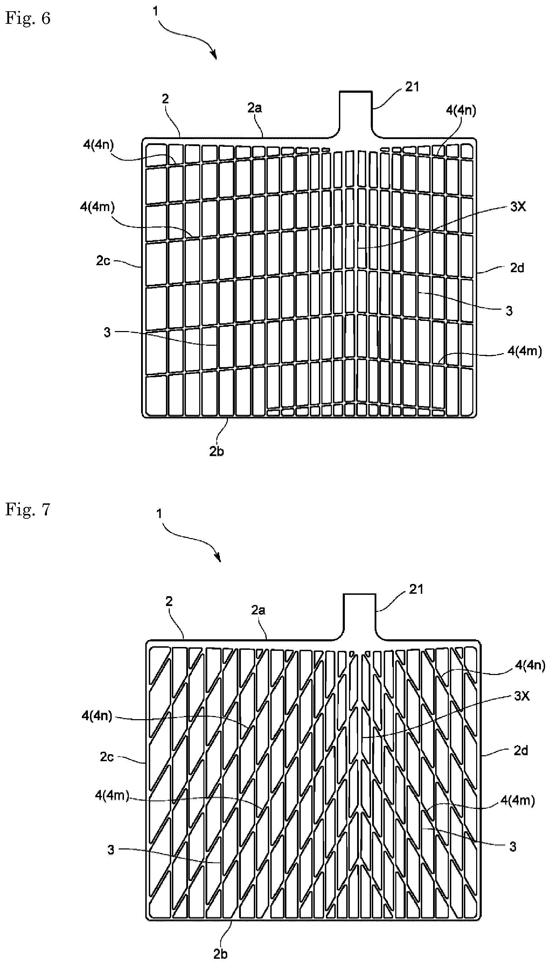

Although the slant angle of each of the slanted bones 4 is 45° in the above-described embodiment, it may be other values. As shown in Fig. 6, the slant angle of the slanted bone 4 may be 5° in a lateral direction in Fig. 6 (i.e., 85° with respect to a main vertical bone 3X). As shown in Fig. 7, the slant angle may be 60° (i.e., 30° with respect to a main vertical bone 3X).

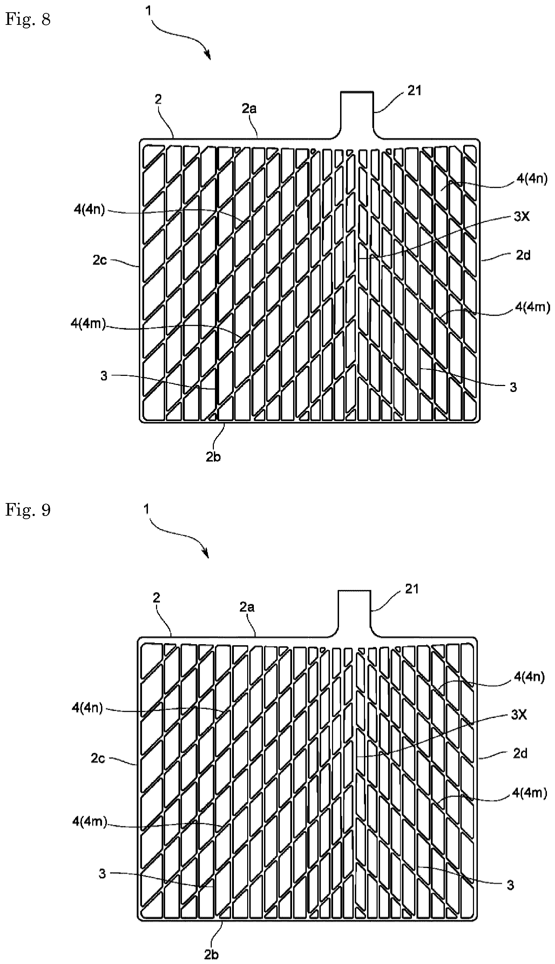

Although the connection portions of the slanted bones 4 on the right and left sides are the same as each other in the height direction in the above-described embodiment, they may be shifted from each other in a height direction, as shown in Figs. 8 and 9.

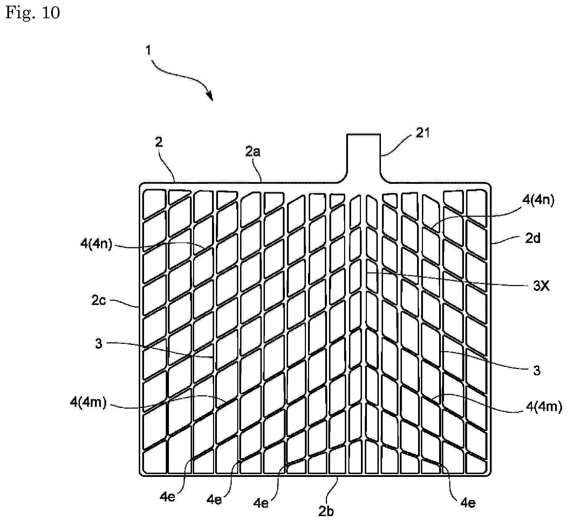

Although all of the slanted bones 4 are connected to the lower side 2b or side 2c or 2d of the frame bone 2 in the above-described embodiment, some of the slanted bones 4 may not be connected to the lower side 2b or side 2c or 2d of the frame bone 2. For example, as shown in Fig. 10, out of a plurality of slanted bones 4, the slanted bones 4 that cross a side 2c or 2d of the frame bone 2 when linearly extending are connected to the side 2c or 2d, like the above-described embodiment: in contrast, out of the plurality of slanted bones 4, the slanted bones 4 that cross a lower side 2b of the frame bone 2 when linearly extending are connected to the vertical bone 3 immediately before or more beforehand of the lower side 2b, and further, an end 4e of the slanted bone 4 is formed at the vertical bone 3 immediately before or more beforehand of the lower side 2b. In this case, each of a plurality of spaces defined by the lower side 2b and the like is formed into a substantially quadrilateral shape. The slant angles of a plurality of slanted bones 4m branched from the main vertical bone 3X with respect to the main vertical bone 3X become greater apart from the upper side 2a of the frame bone 2. In the grid shown in Fig. 10, the slant angle of the slanted bone 4m nearest the upper side 2a is 30° (i.e., 60° with respect to the main vertical bone 3X), and further, the slant angle of the remotest slanted bone 4m is 20° (i.e., 70° with respect to the main vertical bone 3X). In this manner, the optimum slant angle of the slanted bone 4m can be set depending on collected electric power. Thus, the potential distribution of the grid 1 can be made more uniform, and the workability for filling the grid with the active material can be enhanced.

Although the grid includes the plurality of slanted bones 4 (4m) slantwise extending downward from the main vertical bone 3X and the plurality of slanted bones 4 (4n) slantwise extending downward from the upper side 2a of the frame bone 2 in the above-described embodiment, the grid may be devoid of slanted bones 4 (4n) slantwise extending downward from the upper side 2a.

Although the grid used for a lead-acid storage battery is exemplified in the above-described embodiment, the present invention is not limited to this. For example, the grid according to the present invention is applicable to a grid filled with an active material for a nickel-metal hydride battery and the like.

Although the grid 1 is formed by blanking in the above-described embodiment, it may be formed by casting.

Although the grid in the above-described embodiment includes the upper side out of the four sides of the frame bone as the first side portion and the lower side as the second side portion, one of the right and left sides out of the four sides of the frame bone may be used as a first side portion whereas the other may be used as a second side portion.

The present invention is not limited to the above-described embodiment, and it may be variously modified without departing from the scope of the claims.

### DESCRIPTION OF REFERENCE SIGNS

- 1: grid
- 2: frame bone
- 2a: upper side
- 2b: lower side
- 21: lug portion
- 3: vertical bone
- 3X: main vertical bone
- 4: slanted bone
- 5: connection portion

## Claims

1. A storage battery grid (1), comprising:
a) a frame bone (2) that includes a substantially rectangular shape;
b) a lug portion (21) that is connected to a first side portion (2a) of the frame bone and projects outwardly from the frame bone;
c) a main bone (3X) that extends from a connection portion (5) of the first side portion, to which the lug portion is connected, to a second side portion (2b) which is opposed to the first side portion;
d) a plurality of sub-bones (3) that extends from the first side portion (2a) to the second side portion (2b); and
e) a plurality of slanted bones (4, 4n, 4m) that extend obliquely toward the second side portion (2b), at least part of the plurality of slanted bones (4, 4n, 4m) branching from the main bone (3X, 3) toward both sides,
f) wherein the plurality of slanted bones are arranged at intervals in a direction in which the main bone (3X, 3) extends, and
g) at least part of a plurality of spaces, which are defined by the main bone and the sub-bone that are partially forming sides of the spaces, include a substantially quadrilateral shape,
h) wherein the plurality of sub-bones (3) are configured such that the width of each of the plurality of sub-bones (3) becomes smaller as the plurality of sub-bones are more apart from the main bone.

2. The storage battery grid according to claim 1, wherein part of the plurality of slanted bones branches from the first side portion of the frame bone.

3. The storage battery grid according to claim 1 or 2, wherein part of the plurality of slanted bones branches from the connection portion, to which the lug portion is connected in the first side portion of the frame bone.

4. The storage battery grid according to any one of claims 1 to 3, wherein the sub-bone comprises a plurality of sub-bones arranged at intervals in a direction in which the first side portion extends, and
the intervals of the sub-bones increase in a direction away from the main bone.

5. The storage battery grid according to claim 4, wherein a plurality of spaces, which are defined by the second side portion, the sub-bone and the slanted bone that are partially forming sides of the spaces, include a substantially quadrilateral shape.

6. The storage battery grid according to any one of claims 1 to 5, wherein the main bone is arranged perpendicularly to the first side portion and the second side portion.

7. The storage battery grid according to any one of claims 1 to 6, wherein the grid is devoid of a lateral bone that is substantially parallel to the first side portion of the frame bone.

8. The storage battery grid according to any one of claims 1 to 7, wherein intervals of the slanted bones, which are part of the plurality of slanted bones and branching from the main bone, increase as the slanted bones extend away from the first side portion.

9. The storage battery grid according to any one of claims 1 to 8, wherein a slant angle of the slanted bones relative to the main bone increases as the slanted bones extend away from the first side portion, the slanted bones being part of the plurality of slanted bones and branching from the main bone.

10. The storage battery grid according to any one of claims 1 to 9, wherein a slant angle of the plurality of slanted bones is in a range from 5 degrees to 60 degrees.

11. The storage battery grid according to any one of claims 1 to 10, wherein a width of the main bone in a plan view decreases as it extends away from the lug portion.

12. The storage battery grid according to any one of claims 1 to 11, wherein a width of the first side portion in a plan view increases as it approaches to the lug portion.

13. A storage battery comprising the storage battery grid according to any one of claims 1 to 12.

14. The storage battery according to claim 13, wherein the storage battery grid is made from a lead alloy.

15. The storage battery according to claim 13 or 14, wherein the storage battery grid is formed by blanking.

16. A method of manufacturing a storage battery grid (1) comprising:
a) forming a frame bone (2) that includes a substantially rectangular shape;
b) forming a lug portion (21) that is connected to a first side portion of the frame bone and projects outwardly from the frame bone;
c) forming a main bone (3X, 3) that extends from a connection portion (5) of the first side portion, to which the lug portion is connected, to a second side portion (2b) which is opposed to the first side portion;
d) forming a plurality of sub-bones (3) that extends from the first side portion (2a) to the second side portion (2b);
e) forming a plurality of slanted bones (4, 4n, 4m) that extend obliquely toward the second side portion (2b), at least part of the plurality of slanted bones branching from the main bone (3X, 3) toward both sides;
f) arranging the plurality of slanted bones at intervals in a direction in which the main bone extends; and
g) causing at least part of a plurality of spaces, which are defined by the main bone and the sub-bone that are partially forming sides of the spaces, to include a substantially quadrilateral shape,
h) wherein the plurality of sub-bones (4, 4n, 4m) are configured such that the width of each of the plurality of sub-bones becomes smaller as the plurality of sub-bones are more apart from the main bone.

## Patentansprüche

1. Speicherbatteriegitter (1), umfassend:
a) einen Skelettrahmen (2), der eine rechteckige Form umfasst;
b) einen Laschenabschnitt (21), der mit einem ersten Seitenabschnitt (2a) des Skelettrahmens verbunden ist und vom dem Skelettrahmen nach außen hervorsteht;
c) ein Hauptskelettelement (3X), das sich von einem Verbindungsabschnitt (5) des ersten Seitenabschnitts, mit dem der Laschenabschnitt verbunden ist, zu einem zweiten Seitenabschnitt (2b) erstreckt, der dem ersten Seitenabschnitt gegenüberliegt;
d) mehrere Teilskelettelemente (3), die sich von dem ersten Seitenabschnitt (2a) zu dem zweiten Seitenabschnitt (2b) erstrecken; und
e) mehrere geneigte Skelettelemente (4, 4n, 4m), die sich schräg in Richtung des zweiten Seitenabschnitts (2b) erstrecken, wobei mindestens ein Teil der mehreren geneigten Skelettelemente (4, 4n, 4m) von dem Hauptskelettelement (3X, 3) in Richtung beider Seiten abzweigt,
f) wobei die mehreren geneigten Skelettelemente in Intervallen in einer Richtung angeordnet sind, in der sich das Hauptskelettelement (3X, 3) erstreckt, und
g) mindestens ein Teil von mehreren Räumen, die durch das Hauptskelettelement und das Teilskelettelement definiert werden, die teilweise Seiten der Räume bilden, eine im Wesentlichen vierseitige Form bilden,
h) wobei die mehreren Teilskelettelemente (3) so ausgebildet sind, dass die Breite eines jeden der mehreren Teilskelettelemente (3) kleiner wird, je weiter die mehreren Teilskelettelemente von dem Hauptskelettelement entfernt liegen.

2. Speicherbatteriegitter nach Anspruch 1, wobei ein Teil der mehreren geneigten Skelettelemente von dem ersten Seitenabschnitt des Skelettrahmens abzweigt.

3. Speicherbatteriegitter nach Anspruch 1 oder 2, wobei ein Teil der mehreren geneigten Skelettelemente von dem Verbindungsabschnitt abzweigt, mit dem der Laschenabschnitt in dem ersten Seitenabschnitt des Skelettrahmens verbunden ist.

4. Speicherbatteriegitter nach einem der Ansprüche 1 bis 3, wobei das Teilskelettelement mehrere Teilskelettelemente umfasst, die in Intervallen in einer Richtung angeordnet sind, in der sich der erste Seitenabschnitt erstreckt, und
die Intervalle der Teilskelettelemente in einer Richtung größer werden, die von dem Hauptskelettelement fort führt.

5. Speicherbatteriegitter nach Anspruch 4, wobei mehrere Räume, die durch den zweiten Seitenabschnitt, das Teilskelettelement und das geneigte Skelettelement, die teilweise Seiten der Räume bilden, definiert werden, eine im Wesentlichen vierseitige Form umfassen.

6. Speicherbatteriegitter nach einem der Ansprüche 1 bis 5, wobei das Hauptskelettelement senkrecht zu dem ersten Seitenabschnitt und dem zweiten Seitenabschnitt angeordnet ist.

7. Speicherbatteriegitter nach einem der Ansprüche 1 bis 6, wobei das Gitter kein laterales Skelettelement aufweist, das im Wesentlichen parallel zu dem ersten Seitenabschnitt des Skelettrahmens verläuft.

8. Speicherbatteriegitter nach einem der Ansprüche 1 bis 7, wobei Intervalle der geneigten Skelettelemente, die Teil der mehreren geneigten Skelettelemente sind und von dem Hauptskelettelement abzweigen, umso größer werden, je weiter sich die geneigten Skelettelemente von dem ersten Seitenabschnitt fort erstrecken.

9. Speicherbatteriegitter nach einem der Ansprüche 1 bis 8, wobei ein Neigungswinkel der geneigten Skelettelemente relativ zu dem Hauptskelettelement in dem Maße größer wird, je weiter sich die geneigten Skelettelemente von dem ersten Seitenabschnitt fort erstrecken, wobei die geneigten Skelettelemente Teil der mehreren geneigten Skelettelemente sind und von dem Hauptskelettelement abzweigen.

10. Speicherbatteriegitter nach einem der Ansprüche 1 bis 9, wobei ein Neigungswinkel der mehreren geneigten Skelettelemente in einem Bereich von 5 Grad bis 60 Grad liegt.

11. Speicherbatteriegitter nach einem der Ansprüche 1 bis 10, wobei eine Breite des Hauptskelettelements in einer Grundrissansicht kleiner wird, je weiter es sich von dem Laschenabschnitt fort erstreckt.

12. Speicherbatteriegitter nach einem der Ansprüche 1 bis 11, wobei eine Breite des ersten Seitenabschnitts in einer Grundrissansicht größer wird, je mehr er sich dem Laschenabschnitt nähert.

13. Speicherbatterie, die das Speicherbatteriegitter nach einem der Ansprüche 1 bis 12 umfasst.

14. Speicherbatterie nach Anspruch 13, wobei das Speicherbatteriegitter aus einer Bleilegierung besteht.

15. Speicherbatterie nach Anspruch 13 oder 14, wobei das Speicherbatteriegitter durch Ausstanzen hergestellt wird.

16. Verfahren zum Herstellen eines Speicherbatteriegitters (1), umfassend:
a) Bilden eines Skelettrahmens (2), der eine im Wesentlichen rechteckige Form umfasst;
b) Bilden eines Laschenabschnitts (21), der mit einem ersten Seitenabschnitt des Skelettrahmens verbunden ist und vom dem Skelettrahmen nach außen hervorsteht;
c) Bilden eines Hauptskelettelements (3X, 3), das sich von einem Verbindungsabschnitt (5) des ersten Seitenabschnitts, mit dem der Laschenabschnitt verbunden ist, zu einem zweiten Seitenabschnitt (2b) erstreckt, der dem ersten Seitenabschnitt gegenüberliegt;
d) Bilden mehrere Teilskelettelemente (3), die sich von dem ersten Seitenabschnitt (2a) zu dem zweiten Seitenabschnitt (2b) erstrecken;
e) Bilden mehrerer geneigter Skelettelemente (4, 4n, 4m), die sich schräg in Richtung des zweiten Seitenabschnitts (2b) erstrecken, wobei mindestens ein Teil der mehreren geneigten Skelettelemente von dem Hauptskelettelement (3X, 3) in Richtung beider Seiten abzweigt;
f) Anordnen der mehreren geneigten Skelettelemente in Intervallen in einer Richtung, in der sich das Hauptskelettelement erstreckt; und
g) Veranlassen, dass mindestens ein Teil von mehreren Räumen, die durch das Hauptskelettelement und das Teilskelettelement definiert werden, die teilweise Seiten der Räume bilden, eine im Wesentlichen vierseitige Form umfassen,
h) wobei die mehreren Teilskelettelemente (4, 4n, 4m) so ausgebildet sind, dass die Breite eines jeden der mehreren Teilskelettelemente kleiner wird, je weiter die mehreren Teilskelettelemente von dem Hauptskelettelement entfernt liegen.

## Revendications

1. Grille de batterie d'accumulateurs (1), comprenant :
a) une ossature formant cadre (2) présentant une forme sensiblement rectangulaire ;
b) une partie formant patte (21) qui est reliée à une partie formant premier côté (2a) de l'ossature formant cadre et qui fait saillie vers l'extérieur à partir de l'ossature formant cadre ;
c) une arête principale (3X) qui s'étend d'une partie de liaison (5) de la partie formant premier côté, à laquelle est reliée la partie formant patte, à une partie formant second côté (2b) qui est opposée à la partie formant premier côté ;
d) une pluralité d'arêtes secondaires (3) qui s'étendent de la partie formant premier côté (2a) à la partie formant second côté (2b) ; et
e) une pluralité d'arêtes inclinées (4, 4n, 4m) qui s'étendent obliquement vers la partie formant second côté (2b), au moins une partie de la pluralité d'arêtes inclinées (4, 4n, 4m) partant de l'arête principale (3X, 3) en direction des deux côtés ;
f) dans laquelle la pluralité d'arêtes inclinées est disposée à des intervalles, dans une direction dans laquelle s'étend l'arête principale (3X, 3) ; et
g) au moins une partie d'une pluralité d'espaces qui sont définis par l'arête principale et l'arête secondaire qui forment en partie des côtés des espaces présente sensiblement une forme de quadrilatère ;
h) dans laquelle la pluralité d'arêtes secondaires (3) est conçue de manière que la largeur de chaque arête de la pluralité d'arêtes secondaires (3) se réduise à mesure que la pluralité d'arêtes secondaires s'écarte de l'arête principale.

2. Grille de batterie d'accumulateurs selon la revendication 1, dans laquelle une partie de la pluralité d'arêtes inclinées part de la partie formant premier côté de l'ossature formant cadre.

3. Grille de batterie d'accumulateurs selon la revendication 1 ou 2, dans laquelle une partie de la pluralité d'arêtes inclinées part de la partie de liaison à laquelle est reliée la partie formant patte dans la partie formant premier côté de l'ossature formant cadre.

4. Grille de batterie d'accumulateurs selon l'une quelconque des revendications 1 à 3, dans laquelle l'arête secondaire comprend une pluralité d'arêtes secondaires disposées à des intervalles, dans une direction dans laquelle s'étend la partie formant premier côté, et
les intervalles des arêtes secondaires augmentent dans une direction opposée à l'arête principale.

5. Grille de batterie d'accumulateurs selon la revendication 4, dans laquelle une pluralité d'espaces qui sont définis par la partie formant second côté, l'arête secondaire et l'arête inclinée qui forment en partie des côtés des espaces présente sensiblement une forme de quadrilatère.

6. Grille de batterie d'accumulateurs selon l'une quelconque des revendications 1 à 5, dans laquelle l'arête principale est disposée perpendiculairement à la partie formant premier côté et à la partie formant second côté.

7. Grille de batterie d'accumulateurs selon l'une quelconque des revendications 1 à 6, dans laquelle la grille est dépourvue d'arête latérale qui est sensiblement parallèle à la partie formant premier côté de l'ossature formant cadre.

8. Grille de batterie d'accumulateurs selon l'une quelconque des revendications 1 à 7, dans laquelle les intervalles des arêtes obliques qui font partie de la pluralité d'arêtes obliques et qui partent de l'arête principale augmentent à mesure que les arêtes inclinées s'éloignent de la partie formant premier côté.

9. Grille de batterie d'accumulateurs selon l'une quelconque des revendications 1 à 8, dans laquelle un angle d'inclinaison des arêtes inclinées par rapport à l'arête principale augmente à mesure que les arêtes inclinées s'éloignent de la partie formant premier côté, les arêtes inclinées faisant partie de la pluralité d'arêtes inclinées et partant de l'arête principale.

10. Grille de batterie d'accumulateurs selon l'une quelconque des revendications 1 à 9, dans laquelle un angle d'inclinaison de la pluralité d'arêtes inclinées se situe dans une plage de 5 à 60 degrés.

11. Grille de batterie d'accumulateurs selon l'une quelconque des revendications 1 à 10, dans laquelle une largeur de l'arête principale selon une vue en plan diminue à mesure qu'elle s'éloigne de la partie formant patte.

12. Grille de batterie d'accumulateurs selon l'une quelconque des revendications 1 à 11, dans laquelle une largeur de la partie formant premier côté selon une vue en plan augmente à mesure qu'elle se rapproche de la partie formant patte.

13. Batterie d'accumulateurs comprenant la grille de batterie d'accumulateurs selon l'une quelconque des revendications 1 à 12.

14. Batterie d'accumulateurs selon la revendication 13, dans laquelle la grille de batterie d'accumulateurs est constituée d'un alliage de plomb.

15. Batterie d'accumulateurs selon la revendication 13 ou 14, dans laquelle la grille de batterie d'accumulateurs est formée par découpage à la presse.

16. Procédé de fabrication d'une grille de batterie d'accumulateurs (1), comprenant les étapes consistant à :
a) former une ossature formant cadre (2) présentant une forme sensiblement rectangulaire ;
b) former une partie formant patte (21) qui est reliée à une partie formant premier côté de l'ossature formant cadre et qui fait saillie vers l'extérieur à partir de l'ossature formant cadre ;
c) former une arête principale (3X, 3) qui s'étend d'une partie de liaison (5) de la partie formant premier côté, à laquelle est reliée la partie formant patte, à une partie formant second côté (2b) qui est opposée à la partie formant premier côté ;
d) former une pluralité d'arêtes secondaires (3) qui s'étendent de la partie formant premier côté (2a) à la partie formant second côté (2b) ;
e) former une pluralité d'arêtes inclinées (4, 4n, 4m) qui s'étendent obliquement vers la partie formant second côté (2b), au moins une partie de la pluralité d'arêtes inclinées partant de l'arête principale (3X, 3) en direction des deux côtés ;
f) disposer la pluralité d'arêtes inclinées à des intervalles, dans une direction dans laquelle s'étend l'arête principale ; et
g) faire qu'au moins une partie d'une pluralité d'espaces qui sont définis par l'arête principale et l'arête secondaire qui forment en partie des côtés des espaces présente sensiblement une forme de quadrilatère ;
h) dans laquelle la pluralité d'arêtes secondaires (4, 4n, 4m) est conçue de manière que la largeur de chaque arête de la pluralité d'arêtes secondaires se réduise à mesure que la pluralité d'arêtes secondaires s'écarte de l'arête principale.
